# EUROPEAN PATENT SPECIFICATION

(11) **EP 3 410 630 B1**
(45) Date of publication and mention of the grant of the patent: **21.04.2021**
(21) Application number: 17305622.7
(22) Date of filing: 30.05.2017
(51) Int. Cl.: H04L 9/08, H04L 9/00

(54) **GENERAL DATA PROTECTION METHOD FOR MULTICENTRIC SENSITIVE DATA STORAGE AND SHARING**
VERFAHREN ZUM ALLGEMEINEDATEN SCHUTZ FÜR MULTIZENTRISCHE SPEICHERUNG EMPFINDLICHER DATEN UND GEMEINSAME NUTZUNG
PROCÉDÉ DE PROTECTION DE DONNÉES GÉNÉRALES POUR LE PARTAGE ET LA MÉMORISATION MULTICENTRIQUES DE DONNÉES SENSIBLES

(43) Date of publication of application: 05.12.2018
(73) Proprietor: BE-Invest International SA, 8009 Strassen (LU)
(72) Inventor: CAREDDA, Laurent, 63320 Ludesse (FR); SCHOEFFLER, Benoit, 63000 Clermont-Ferrand (FR); MANSET, David, 74370 Pringy (FR); KOSCINA BOBADILLA, Mirko Zvonimir, 63100 Clermont-Ferrand (FR)
(74) Representative: Icosa

(56) References cited:
- CA-A1- 2 296 631
- US-A1- 2007 005 972
- US-A1- 2013 247 230
- US-B1- 7 499 551
- CHUNBO MA ET AL: "Proxy Key Re-encapsulation Mechanism for Group Communications", IACR, INTERNATIONAL ASSOCIATION FOR CRYPTOLOGIC RESEARCH, vol. 20080525:120339, 19 May 2008 (2008-05-19), pages 1-7, XP061002846, [retrieved on 2008-05-19]

## Description

### FIELD OF INVENTION

The present invention pertains to the field of pseudo-anonymized and encrypted sensitive data communication and processing. In particular, the invention relates to a method for handling data containing sensitive information which are subject to access restriction and/or processing restriction under privacy regulation.

### BACKGROUND OF INVENTION

Recent and fast progress in the field of information and communication technologies has brought society to deal with continuously expanding public social networks, private networks, and increasing volumes of sensitive information. This massive accumulation of information is leading toward the so-called "big data driven society", consequentially resulting in a paradigm shift. Sensitive data therefore are receiving more attention and are being regulated to ascend user's privacy to the fundamental rights of a person. Dedicated processing and storage systems are thus required, today, to enable appropriate usages of sensitive data, and which integrate the principles depicted in privacy regulations, such as "privacy-by-design". Said systems have to be designed in a user-centric manner in order to allow for multiple interactions' type. Users shall have total access to their personal data, and more importantly audit trails of the consented and legal processing of their personal data. This implies that the user has the right to modify/withdraw consent at any point in time; wherein all this information delimits the processing of the user personal data under the privacy regulation. At the same time, this transparency of processing towards the user has to be granted while ensuring the complete privacy, which may be accomplished thanks to pseudo-anonymization and encryption techniques.

US patent application US 2017/061559 discloses a system for handling data which are associated with contextual information allowing a processing of said data, compliant with a legal privacy obligation. However, the data integrates the system already in an anonymous form and are not encrypted afterwards, therefore in case of information leakage there is a higher re-identification risk for the concerned person(s).

Document US 7,499,551 discloses a public key infrastructure utilizing master public key encryption in addition to user's public key encryption in encrypting and decrypting session keys, so that an authorized third party can access the encrypted data when the user's private key is not accessible.

Also, US 2013/0247230 develops methods for trusted protocols in a non-secure distributed environment, in which secrets are concealed differently on respective computing resources, and secrets are communicated between such computing resources so as to enable the exploitation of keys, while each of the computing resources ignores at least one of the secrets

C. Ma, J. Ao: "Proxy Key Re-encapsulation Mechanism for Group Communications", discloses a key encapsulation, proxy re-incapsulation and decapsulation method being performed respectively by a sending member of a group, a proxy server, and a receiving member of another group.

In spite of their respective advantages, those solutions do not prevent a substantial flow and storage of public keys in communication networks, which not only tends to increase the management complexity, notably in the frame of centralized controlling taking care of privacy regulations, but also leads to increased exposure to security flaws.

In this context, it is necessary to develop a system that ensures data processing abiding to privacy regulations, wherein the data are associated with the processing purpose. Once stored in a secured pseudo-anonymized and form, said data are accessible only if the purpose(s) of the access will respect the defined limit of processing.

### SUMMARY

The present invention relates to a computer-implemented method for the protection of sensitive data storage and/or sharing in a multicentric system compliant with claim 1.

In execution modes, the method comprises the steps of:
a) receiving a request from at least one customer in the multicentric system to share and/or to store sensitive data within at least one recipient in the multicentric system;
b) generating with an asymmetric encryption scheme a Master Key Pair;
c) providing to the at least one customer and the at least one recipient within the multicentric system a key generation service using the Master Key Pair of step b) as seed to generate a Key Pair, comprising a public key and a private key;
d) generating a Symmetric Master Key, with a symmetric encryption scheme, comprising a limit of processing for the sensitive data which are requested to be shared and/or stored by the at least one customer;
e) generating with the Symmetric Master Key and a symmetric encryption scheme a Derivation Master Key for each of the at least one customer and sending the related Derivation Master Key to each of the correspondent at least one customer;
f) receiving at least one encrypted Session Symmetric Key obtained from the Derivation Master Key of the at least one customer; wherein said at least one Session Symmetric Key is generated by the at least one customer and is encrypted using a homomorphic encryption scheme and the public key of said at least one customer;
g) transforming the at least one encrypted Session Symmetric Key; and
h) sending the transformed encrypted Session Symmetric Key to the at least one recipient.

According to one embodiment, the information defining a limit of processing for the sensitive data comprises at least one purpose of processing, stakeholders and the time storage limitation.

According to one embodiment, the method of the present further comprises the step of providing a symmetric encryption scheme to the at least one customer to be used with the public key, generated by said at least one customer in step c) of the computer implemented method, in order to encrypt the sensitive data required to be shared or stored within the at least one recipient by the at least one customer.

According to one embodiment, the method of the present further comprises the step of providing a homomorphic decryption scheme to the at least one recipient in order to decrypt the encrypted transformed Session Symmetric Key using the private keys, generated by the at least one recipient in step c) of the computer implemented method.

According to one embodiment, the method of the present further comprises the step of providing a symmetric encryption scheme to the at least one recipient in order to decrypt the encrypted sensitive data received with the use of the decrypted transformed Session Symmetric Key.

According to one embodiment, each of the keys generated are associated to an identification code.

According to one embodiment, in the computer-implemented method comprises a further step of receiving the encrypted sensitive data from the at least one customer and transmitting said encrypted sensitive data to the at least one recipient.

According to one embodiment, the encrypted sensitive data are transmitted with the identification code associated to the key to be used for the decryption of said encrypted sensitive data.

The present invention further relates to a system for protection of sensitive data storage and sharing in a multicentric system, the system comprising a data processing system comprising means for carrying out the steps of the method according to anyone of the embodiments described hereabove.

The present invention further relates to a computer program product for protection of sensitive data storage and sharing in a multicentric system, the computer program product comprising instructions which, when the program is executed by a plurality of computers, cause the computers to carry out the steps of the method according to anyone of the embodiments described hereabove.

The present invention further relates to a computer-readable storage medium comprising instructions which, when the program is executed by a plurality of computers, cause the computers to carry out the steps of the method according to anyone of the embodiments described hereabove.

### DEFINITIONS

In the present invention, the following terms have the following meanings:
- "**Controller**": refers to the natural or legal person, public authority, agency or other body which, alone or jointly with others, determines the purposes and means of the processing of personal data.
- "**Data subject**": refers to an identified or an identifiable natural person; wherein an identifiable person is one who can be identified, directly or indirectly, in particular by reference to an identifier such as a name, an identification number, location data, or more factors specific to physical, physiological, genetic, etc. of that natural person.
- "**Pseudo-anonymized sensitive data**": refers to personal data that had underwent a processing in such a manner that said personal data can no longer be attributed to a specific data subject without using additional information to ensure that the personal data are not attributed to an identified or an identifiable natural person, such as for example by replacing all identifying information in the personal data by an internal identifier stored separately from the personal data itself.
- "**Consent of the data subject**": refers to any freely given, specific, informed and unambiguous indication of the data subject's wishes by which he or she, by a statement or by a clear affirmative action, signifies agreement to the designated processing of personal data relating to him or her.
- "**Customer**": refers to a natural or legal person, public authority, agency or other body which processes personal data. Within the present invention the customer may also refer to any informatic means of the natural or legal person, public authority, agency or another body.
- "**Encrypted sensitive data**": refers to personal data that had underwent encryption into a cyphertext which can no longer be understood by anyone except authorized parties.
- "**Limit of processing**": refers to the ensemble of processing of personal data that are allowed under the privacy regulation.
- "**Processing**": refers to any operation or set of operations which is performed on personal data or on sets of personal data, whether or not by automated means, such as collection, recording, organization, structuring, storage, adaptation or alteration, retrieval, consultation, use, disclosure by transmission, dissemination or otherwise making available, alignment or combination, restriction, erasure or destruction.
- "**Purpose of processing**": refers to scope of the personal data processing.
- "**Privacy regulation**": refers to a regulation containing laws concerning data protection of subjects within a geographic region.
- "**Recipient**": refers to a natural or a legal person, public authority, agency or another body, to which the personal data are disclosed, whether a third party or not. Within the present invention the recipient may also refer to any informatic means of the natural or legal person, public authority, agency or another body.
- "**Stakeholders**": refers to a group comprising the different actors implied in the data processing such as a data subject, a controller, a recipient and a processor.
- "**Storage time limitation**": refers to maximum time during which the personal data can be stored according to the purposes for which the personal data are processed.

### DETAILED DESCRIPTION

This invention relates to a computer-implemented method for the protection of sensitive data storage and sharing in a multicentric system, wherein the multicentric system may comprise multiples parties sharing and processing sensitive data. By center it has to be understood any public authorities, (e.g. university hospital, public administration etc.), agencies (e.g. international organizations, intergovernmental organizations etc.), or any other parties (e.g. corporations, departments, associations etc.).

The present invention comprises a preliminary step of receiving a request from at least one customer in the multicentric system to share and/or to store sensitive data within at least one recipient in the multicentric system. By way of a non-limiting example, the sensitive data may be biometric data, genetic data, clinical data, care data, insurance data, judicial data, personal data revealing racial or ethnic origin, political opinions, religious or philosophical beliefs, or trade union membership, personal data revealing social difficulties, etc.

The computer-implemented method according to the present invention generates, with an asymmetric encryption scheme, a Master Key Pair. According to one embodiment, the algorithm implemented in the asymmetric encryption scheme is the ElGamal encryption algorithm or other homomorphic encryption scheme defined over an elliptic curve such as the Curve P-256 algorithm, the Curve P-384 algorithm and the Curve 25519 algorithm among others.

According to one embodiment, a key generation service using as seed the Master Key Pair is provided to the at least one customer and the at least one recipient within the multicentric system to generate a Key Pair, comprising a public key and a private key. According to one embodiment, the key generation service calculates the Key Pair by using the Curve 25519 algorithm. According to an alternative embodiment, the key generation service uses a Curve P-256 algorithm or a Curve P-384 algorithm for the Key Pair generation.

According to one embodiment, the computer-implemented method of the present invention comprises the step of generating a Symmetric Master Key, according to the key scheduling process of the encryption scheme used, comprising a limit of processing for the sensitive data which are requested to be shared and/or stored by the at least one customer. According to one embodiment, the information defining a limit of processing for the personal data comprises at least one purpose of processing, at least one stakeholders and the storage time limitation, not to be construed as being limited hereto. According to one embodiment, the information defining a limit of processing for the personal data further comprises consent to processing of the data subject and/or a list of recipients or categories of recipients that can access the data. According to one embodiment, the symmetric encryption scheme may implement a symmetric key block cipher with a block size of 128 bits and key sizes up to 256 bits as a Twofish algorithm, a symmetric key block cipher with a block size of 128 bits and supports a key size of 128, 192 or 256 bits such as the Serpent algorithm, a family of ciphers with different key and block sizes as the Advanced Encryption Standard algorithm (Rijndael) or Blowfish algorithm which is a 64-bit block size and a variable key length from 32 bits up to 448 bits, or other algorithms such as CAST5, Kuznyechik, RC4, 3DES, Skipjack or the International Data Encryption algorithm.

According to one embodiment, the computer-implemented method of the present invention further comprises the step of generating with the Symmetric Master Key and a symmetric encryption scheme a Derivation Master Key for each of the at least one customer and sending the related Derivation Master Key to each of the correspondent at least one customer. According to one embodiment, the symmetric encryption scheme may implement a symmetric key block cipher with a block size of 128 bits and key sizes up to 256 bits as a Twofish algorithm, a symmetric key block cipher with a block size of 128 bits and supports a key size of 128, 192 or 256 bits such as the Serpent algorithm, a family of ciphers with different key and block sizes as the Advanced Encryption Standard algorithm (Rijndael) or Blowfish algorithm which is a 64-bit block size and a variable key length from 32 bits up to 448 bits, or other algorithms such as CAST5, Kuznyechik, RC4, 3DES, Skipjack or the International Data Encryption algorithm.

According to one embodiment, the computer-implemented method of the present invention receives an encrypted Session Symmetric Key obtained from the Derivation Master Key of the at least one customer. Said Session Symmetric Key is unique for each specified limit of processing, recipient and type of sensitive data to encrypt. According to one embodiment, said Session Symmetric Key is generated by the at least one customer and is encrypted using a homomorphic encryption scheme and the public key of said at least one customer. The homomorphic encryption allows computations to be carried out on cipher data, thus generating an encrypted result which, when decrypted, matches the result of operations performed on the plain data. According to one embodiment the homomorphic encryption scheme is based on a partially homomorphic cryptosystem or on a fully homomorphic cryptosystem. By way of a non-limiting example, the homomorphic encryption scheme may use a cryptogram with two components E(m₁) = (c₁,c₂), where c₁ is a value related to the decryption key such as the ElGamal algorithm. According to one embodiment, the homomorphic encryption scheme implements an Unpadded RSA algorithm.

According to one embodiment, the computer-implemented method of the present invention transforms the encrypted Session Symmetric Key. By way of a non-limiting example, the transformation may consist in multiplying, in the cryptogram E(m₁) = (c₁,c₂), the c₁ value by a factor *k* in order to change the part of the cryptogram related to the key. Thanks to the homomorphic encryption properties the cryptogram related to the Session Symmetric Key can be modified without the necessity to decrypt encrypted Session Symmetric Key.

According to one embodiment, the computer-implemented method of the present invention sends the transformed encrypted Session Symmetric Key to the at least one recipient.

According to one embodiment, the computer-implemented method provides a symmetric encryption scheme to the at least one customer encrypted with the public key of the at least one customer, in order to encrypt the sensitive data required to be shared or stored within the at least one recipient by the at least one customer. According to one embodiment, the sensitive data required to be shared or stored are pseudo-anonymized. According to one embodiment, the symmetric encryption scheme is the Advanced Encryption Standard process, a symmetric block cipher, or the Triple Data Encryption Algorithm, a symmetric-key block chipper which applies the Data Encryption Standard cipher algorithm three times to each data block. By means of non-limiting example, the symmetric encryption scheme may be a Twofish algorithm, a Blowfish algorithm, a Serpent algorithm, International Data Encryption algorithm, CAST5 algorithm or a CAST6 algorithm.

According to one embodiment, the computer-implemented method provides a homomorphic decryption scheme to the at least one recipient in order to decrypt the encrypted transformed Session Symmetric Key using the private keys in its possession. According to one embodiment, the homomorphic decryption scheme is based on a ElGamal algorithm or an Unpadded RSA algorithm.

According to one embodiment, the computer-implemented method of the present invention provides a symmetric encryption scheme to the at least one recipient in order to decrypt the encrypted sensitive data received with the use of the decrypted transformed Session Symmetric Key.

According to one embodiment, the Symmetric Session Keys generated are associated to an identification code. According to one embodiment, an index is associated to each center in the multicenter system, comprising the at least one customer and the at least one recipient, and another index is associated to each category of data. According to one embodiment, the identification code of the Session Symmetric Keys is obtained combining the index of the customer center and the index of the recipient center with the index associated to the data category. According to one embodiment, the identification code of the Session Symmetric Keys comprise an index associated to legal information concerning for example the contract related to the data sharing between the customer and the recipient. According to one embodiment, said identification code is a hexadecimal array where the first byte is the code of the costumer, the second byte the code of the recipient, the third byte refers to the purpose of processing and the fourth byte is the key index of the Session Symmetric Key. According to one embodiment, the identification code and associated contract may be stored in a distributed ledger or a blockchain. According to one embodiment, the computer-implemented method of the present invention comprises the further step of receiving the encrypted sensitive data from the at least one customer and transmitting said encrypted sensitive data to the at least one recipient.

According to one embodiment, the encrypted sensitive data are transmitted with the identification code associated to the key to be used for the decryption of said encrypted sensitive data.

The present invention also relates to a system for protection of sensitive data storage and sharing in a multicentric system, the system comprising a data processing system encompassing the means for carrying out the steps of the computer-implemented method according to anyone of the embodiments described hereabove.

The present invention further relates to a computer program product for protection of sensitive data storage and sharing in a multicentric system, the computer program product comprising instructions which, when the program is executed by a computer, cause the computer to carry out the steps of the computer-implemented method according to anyone of the embodiments described hereabove.

The present invention further relates to a computer-readable storage medium comprising instructions which, when the program is executed by a computer, cause the computer to carry out the steps of the computer-implemented method according to anyone of the embodiments described hereabove.

The present invention further relates to a system comprising a storage medium and means for carrying out multiple steps. According to one embodiment, the system according to the present invention uses a key generation service with the Master Key Pair, generated by the computer implemented method, to generate a Key Pair, comprising a public key and a private key, which are then stored in the storage medium. According to one embodiment, the data processing system according to the present invention receives and stores in the storage medium the transformed encrypted Session Symmetric Key generated by the computer-implemented method with a homomorphic encryption scheme and the encrypted sensitive data.

According to one embodiment, the storage medium comprises public key, private key, the transformed encrypted Session Symmetric Key generated on-the-fly and the encrypted sensitive data obtained by the computer-implemented method. According to one embodiment, the storage medium is a secure storage medium such as a Hardware Security Module. According to one embodiment, the data processing system according to the present invention comprises the means for carrying out the step of decrypting the encrypted transformed Session Symmetric Key with a homomorphic decryption scheme using the private keys stored in the memory storage and decrypting the encrypted sensitive data using a symmetric encryption scheme with the decrypted transformed Session Symmetric Key. According to one embodiment, the data processing system comprises the means to carry out the steps of processing the sensitive data, encrypting the sensitive data with a predefined encryption scheme and storing the encrypted data into the storage medium. According to one embodiment, the predefined encryption scheme is selected by the customer between Advanced Encryption Standard-256 or the Triple Data Encryption Algorithm. According to one embodiment, the predefined encryption scheme is selected by the recipient between Advanced Encryption Standard-256 or the Triple Data Encryption Algorithm.

While various embodiments have been described and illustrated, the detailed description is not to be construed as being limited hereto. Various modifications can be made to the embodiments by those skilled in the art without departing from the true spirit and scope of the disclosure as defined by the claims.

### BRIEF DESCRIPTION OF THE DRAWINGS

**Figure 1** is a flow diagram illustrating the initialization steps of the method of the invention for the protection of sensitive data storage and sharing in a multicentric system.
**Figure 2** is a flow diagram illustrating an example of utilization of the present invention method to share pharmaceutical drug trial results between two entities: a customer and a recipient, being part of the multicentric system.

### REFERENCES

1 - Master Key Pair;
2 - Key Pairs;
3 - Symmetric Master Key;
4 - Derivation Master Key;
5 - Session Symmetric Key;
6 - Encrypted Session Symmetric Key;
7 - Encrypted transformed Session Symmetric Key;
8 - Decrypted transformed Session Symmetric Key;
A - Generation of the at least one Session Symmetric Key;
B - Encrypt the sensitive data to be shared using symmetric encryption scheme;
C - Encryption of the Session Symmetric keys using the homomorphic encryption scheme;
D - Transform the Value of the cryptogram in the Session Symmetric Keys;
E - Session Symmetric Keys are decrypted using a homomorphic decryption scheme by the recipient;
F - Decryption of the encrypted sensitive data using a symmetric decryption scheme and the related Session Symmetric Key.

### EXAMPLES

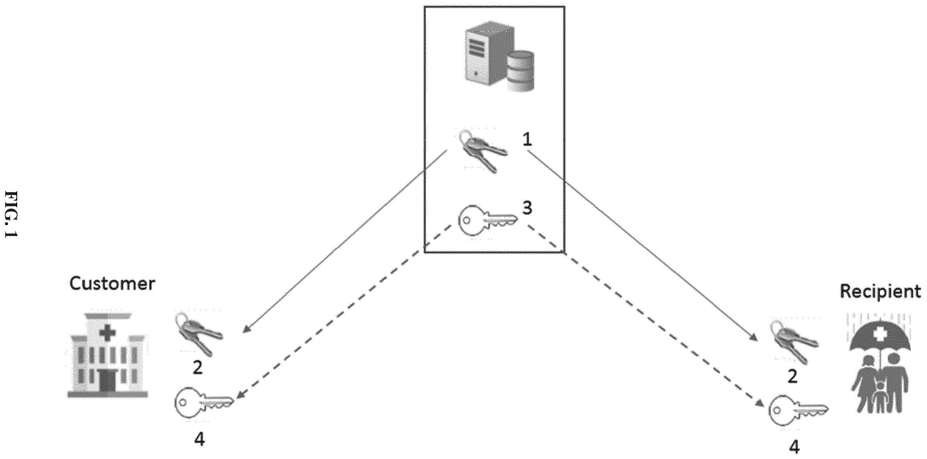

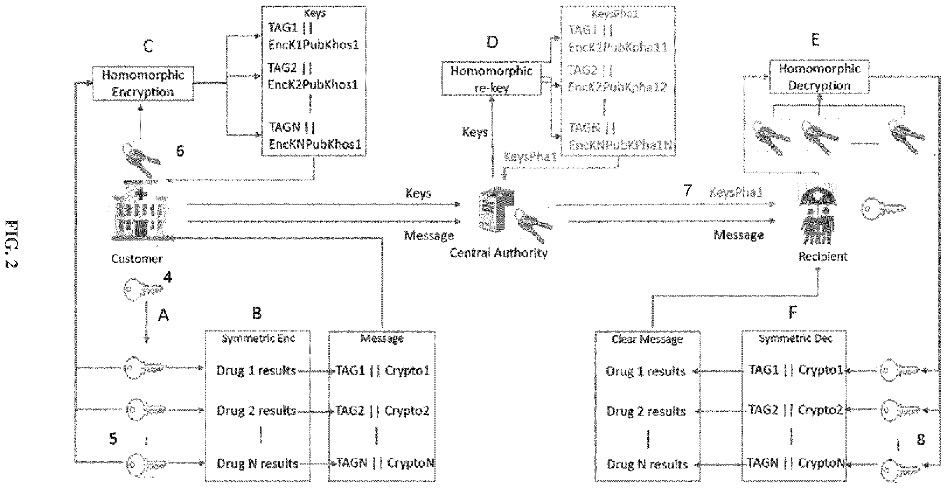

The present invention is further described with an example, illustrated in figures 1 and 2.

The latter example describes the process of sharing sensitive data concerning the results of three different pharmaceutical drug trails between the customer namely Hospital 1 and the recipient namely Pharmaceutical 1.

During an initialization step, both Hospital 1 and Pharmaceutical 1 generate a set of three Key Pairs 2 by using as seed the Master Key Pair 1 and receive a Derivation Master Key 4 generated using as seed the Symmetric Master Key 3 from a Central Authority implementing the computer-implemented method of the present invention. Once Hospital 1 and Pharmaceutical 1 are in possession of their asymmetric homomorphic keys and symmetric keys, they can start sharing sensitive data within the network.

After the initialization step, Hospital 1 can share information with Pharmaceutical 1 through the following steps presented below:
1. Hospital 1 generates three Session Symmetric Keys 5 to encrypt the sensitive data concerning the results of the Drug Trail 1, Drug Trail 2 and Drug Trail 3 (A, in Figure 2);
2. Hospital 1 generates the identification codes TAG1, TAG2 and TAG3, which link the customer (first byte of the TAG), recipient (second byte of the TAG), purpose (third byte of the TAG) and the legal restrictions (fourth byte of the TAG). Each byte is interpreted by a dictionary that maps the value with their respective meaning managed by the Central Authority, and stored in a ledger or blockchain;
3. Hospital 1 encrypt the Drug Trail Results 1, Drug Trail Results 2 and Drug Trail Results 3 using a symmetric encryption scheme and the Session Symmetric Key 1, Session Symmetric Key 2 and Session Symmetric Key 3, respectively. Then, the identification codes TAG1, TAG2 and TAG 3 are concatenated to their corresponding cryptogram, obtaining the final message to be sent (B, in Figure 2);
4. Hospital 1 encrypts the Session Symmetric Key 1, Session Symmetric Key 2 and Session Symmetric Key 3 using the homomorphic encryption scheme and its Public Key. Afterwards, TAG1, TAG2 and TAG 3 are concatenated to the encrypted Session Symmetric Key 1, Session Symmetric Key 2 and Session Symmetric Key 3, respectively (C, in Figure 2);
5. The encrypted Session Symmetric Keys 6 are sent to the Central Authority to transform the value of the cryptogram to decrypt the message according to the proper sensitive key of the Pharmaceutical 1 which is the recipient of the sensitive data. The process consists in multiplying the cryptogram within the Session Symmetric Key 1, Session Symmetric Key 2 and Session Symmetric Key 3, with proper factors *k₁*, *k₂* and *k₃*, respectively (D, in Figure 2);
6. The Central Authority sends the transformed encrypted Session Symmetric Keys 7 to the recipient Pharmaceutical 1;
7. Pharmaceutical 1 decrypts the cryptograms labeled with TAG1, TAG2 and TAG3, using a homomorphic decryption scheme and the Pharmaceutical Private Key 1, Pharmaceutical Private Key 2 and Pharmaceutical Private Key 3, respectively;
8. The decrypted transformed Session Symmetric Keys 8 are recovered by the recipient Pharmaceutical 1 (E, in Figure 2);
9. The encrypted sensitive data labeled with TAG1, TAG2 and TAG3 are decrypted using a symmetric decryption scheme and the decrypted transformed Session Symmetric Key 1, Session Symmetric Key 2 and Session Symmetric Key 3 (F, in Figure 2); and
10. The shared information is stored in the recipient facilities by encrypting again the sensitive data using its own key and symmetric encryption scheme.

## Claims

1. A computer-implemented method for the protection of sensitive data storage and sharing in a multicentric system; said method comprising the steps of:
a) receiving a request from at least one customer in the multicentric system to share and/or to store sensitive data within at least one recipient in the multicentric system;
b) providing at least one Key Pair (2) to the at least one customer and at least one Key Pair (2) to the at least one recipient within the multicentric system, each of said at least one Key Pair (2) comprising a public key and a private key;
c) receiving at least one encrypted Session Symmetric Key (6) from the at least one customer, wherein said at least one Session Symmetric Key (5) is encrypted using the public key of said at least one customer and an encryption scheme; and
d) sending the encrypted Session Symmetric Key (7) to the at least one recipient;
wherein:
- step b) comprises providing said at least one Key Pair (2) by providing to the at least one customer and the at least one recipient a key generation service using a Master Key Pair (1) generated with an asymmetric encryption scheme, as seed to generate said at least one Key Pair (2) of said at least one customer by said at least one customer and to generate said at least one Key Pair (2) of said at least one recipient by said at least one recipient,
- said at least one Session Symmetric Key (5) of step c) is a symmetric key generated by the at least one customer from a Derivation Master Key (4) of the at least one customer, said Derivation Master Key (4) being generated with a Symmetric Master Key (3) and a symmetric encryption scheme for each of said at least one customer and received by each of said at least one customer, said Symmetric Master Key (3) being generated with a symmetric encryption scheme, and comprising a limit of processing for the sensitive data which are requested to be shared and/or stored by said at least one customer,
- in step c), said at least one Session Symmetric Key (5) is encrypted using a homomorphic encryption scheme as said encryption scheme, so that the encrypted Session Symmetric Key (6) is modifiable without being decrypted;
- said method further comprises transforming the at least one encrypted Session Symmetric Key (6) generated by said at least one customer without decrypting it, so that said at least one transformed encrypted Session Symmetric Key (7) can be decrypted using the private key of said at least one Key Pair (2) in possession of said at least one recipient;
- step d) comprises sending the encrypted Session Symmetric Key (7) to the at least one recipient in the transformed form of said encrypted Session Symmetric Key (7).

2. The computer-implemented method according to claim **1,** wherein said method comprises at least one of the steps of generating said Master Key Pair (1), of generating said Symmetric Master Key (3) and of generating said Derivation Master Key (4) and transmitting said Derivation Master Key (4) to each of the correspondent at least one customer.

3. The computer-implemented method according to either one of claim **1** or claim **2,** wherein the information defining a limit of processing for the sensitive data comprises at least one purpose of processing, stakeholders and the time storage limitation.

4. The computer-implemented method according to any one of claims **1** to **3,** further comprising the step of providing a symmetric encryption scheme to the at least one customer, to be used with the public key generated by said at least one customer from step b) of the computer implemented method, in order to encrypt the sensitive data required to be shared or stored within the at least one recipient by the at least one customer.

5. The computer-implemented method according to any one of claims **1** to **4,** further comprising the step of providing a homomorphic decryption scheme to the at least one recipient in order to decrypt the encrypted transformed Session Symmetric Key (7) using said at least one private key of said at least one recipient, generated by the at least one recipient from step b) of the computer implemented method.

6. The computer-implemented method according to claim **5,** further comprising the step of providing a symmetric encryption scheme to the at least one recipient in order to decrypt the encrypted sensitive data received with the use of the decrypted transformed Session Symmetric Key (8).

7. The computer-implemented method according to any one of claims **1** to **6,** wherein each of the keys generated are associated to an identification code.

8. The computer-implemented method according to any one of claims **1** to **7,** wherein the computer-implemented method comprises a further step of receiving the encrypted sensitive data from the at least one customer and transmitting said encrypted sensitive data to the at least one recipient.

9. The computer-implemented method according to any one of claims **1** to **8,** wherein the encrypted sensitive data are transmitted with an identification code associated to the Session Symmetric Key (5) to be used for the decryption of said encrypted sensitive data.

10. A system for protection of sensitive data storage and sharing in a multicentric system, the system comprising a data processing system comprising means for carrying out the steps of the method according to any one of claims **1** to **9.**

11. A computer program product for protection of sensitive data storage and sharing in a multicentric system, the computer program product comprising instructions which, when the program is executed by a plurality of computers, cause the computers to carry out the steps of the method according to any one of claims **1** to **9**.

12. A computer-readable storage medium comprising instructions which, when the program is executed by a plurality of computers, cause the computers to carry out the steps of the method according to any one of claims **1** to **9.**

## Patentansprüche

1. Computerimplementiertes Verfahren zum Schutz der Speicherung empfindlicher Daten und gemeinsamen Nutzung in einem multizentrischen System; wobei das Verfahren die folgenden Schritte umfasst:
a) Empfangen einer Anfrage von mindestens einem Kunden in dem multizentrischen System zur gemeinsamen Nutzung und/ oder Speicherung empfindlicher Daten innerhalb mindestens eines Empfängers in dem multizentrischen System;
b) Bereitstellen mindestens eines Schlüsselpaares (2) für den mindestens einen Kunden und mindestens eines Schlüsselpaares (2) für den mindestens einen Empfänger innerhalb des multizentrischen Systems, wobei jedes des mindestens einen Schlüsselpaares (2) einen öffentlichen Schlüssel und einen privaten Schlüssel umfasst;
c) Empfangen mindestens eines verschlüsselten symmetrischen Sitzungsschlüssels (6) von dem mindestens einen Kunden, wobei der mindestens eine symmetrische Sitzungsschlüssel (5) unter Verwendung des öffentlichen Schlüssels des mindestens einen Kunden und eines Verschlüsselungsschemas verschlüsselt wird; und
d) Senden des verschlüsselten symmetrischen Sitzungsschlüssels (7) an den mindestens einen Empfänger;
wobei:
- Schritt b) das Bereitstellen des mindestens einen Schlüsselpaares (2) durch Bereitstellen für den mindestens einen Kunden und den mindestens einen Empfänger eines Schlüsselgenerierungsdienstes unter Verwendung eines Master-Schlüsselpaares (1) umfasst, das mit einem asymmetrischen Verschlüsselungsschema generiert wird, als Anfang zum Generieren des mindestens einen Schlüsselpaares (2) des mindestens einen Kunden und zum Generieren des mindestens einen Schlüsselpaares (2) des mindestens einen Empfängers durch den mindestens einen Empfänger,
- der mindestens eine symmetrische Sitzungsschlüssel (5) aus Schritt c) ein symmetrischer Schlüssel ist, der durch den mindestens einen Kunden aus einem Master-Ableitungsschlüssel (4) des mindestens einen Kunden generiert wird, wobei der Master-Ableitungsschlüssel (4) mit einem symmetrischen Master-Schlüssel (3) und einem symmetrischen Verschlüsselungsschema für jeden des mindestens einen Kunden generiert wird, und durch jeden des mindestens einen Kunden empfangen wird, wobei der symmetrische Master-Schlüssel (3) mit einem symmetrischen Verschlüsselungsschema generiert wird, und eine Verarbeitungsgrenze für empfindliche Daten umfasst, die angefragt werden, um gemeinsam genutzt und/ oder durch den mindestens einen Kunden gespeichert zu werden,
- in Schritt c) der mindestens eine symmetrische Sitzungsschlüssel (5) unter Verwendung eines homomorphen Verschlüsselungsschemas als Verschlüsselungsschema verschlüsselt wird, sodass der verschlüsselte symmetrische Sitzungsschlüssel (6) veränderbar ist, ohne entschlüsselt zu werden;
- das Verfahren weiter das Umwandeln des mindestens einen verschlüsselten symmetrischen Sitzungsschlüssels (6) umfasst, der durch den mindestens einen Kunden generiert wird, ohne ihn zu entschlüsseln, sodass mindestens ein umgewandelter verschlüsselter symmetrischer Sitzungsschlüssel (7) unter Verwendung des privaten Schlüssels des mindestens einen Schlüsselpaares (2) in Besitz des mindestens einen Empfängers entschlüsselt werden kann;
- Schritt d) das Senden des verschlüsselten symmetrischen Sitzungsschlüssels (7) an den mindestens einen Empfänger in der umgewandelten Form des verschlüsselten symmetrischen Sitzungsschlüssels (7) umfasst.

2. Computerimplementiertes Verfahren nach Anspruch **1,** wobei das Verfahren mindestens einen der Schritte des Generierens des Master-Schlüsselpaares (1), des Generierens des symmetrischen Master-Schlüssels (3) und des Generierens des Master-Ableitungsschlüssels (4) und Übertragens des Master-Ableitungsschlüssels (4) an jeden des entsprechenden mindestens einen Kunden umfasst.

3. Computerimplementiertes Verfahren nach einem von Anspruch **1** oder Anspruch **2,** wobei die Information, die eine Verarbeitungsgrenze für empfindliche Daten definiert, mindestens einen Zweck von Verarbeitung, Beteiligten und der zeitlichen Speicherbegrenzung umfasst.

4. Computerimplementiertes Verfahren nach einem der Ansprüche **1** bis **3,** weiter den Schritt des Bereitstellens eines symmetrischen Verschlüsselungsschemas für den mindestens einen Kunden umfassend, das mit dem öffentlichen Schlüssel zu verwenden ist, der durch den mindestens einen Kunden aus Schritt b) des computerimplementierten Verfahrens generiert wird, um die empfindlichen Daten, die angefragt werden, um gemeinsam genutzt, oder durch den mindestens einen Kunden innerhalb des mindestens einen Empfängers gespeichert zu werden, zu verschlüsseln.

5. Computerimplementiertes Verfahren nach einem der Ansprüche **1** bis **4,** weiter den Schritt des Bereitstellens eines homomorphen Entschlüsselungsschemas für den mindestens einen Empfänger umfassend, um den verschlüsselten umgewandelten symmetrischen Sitzungsschlüssel (7) unter Verwendung des mindestens einen privaten Schlüssels des mindestens eine Empfängers, der durch den mindestens einen Empfänger aus Schritt b) des computerimplementierten Verfahrens generiert wird, zu entschlüsseln.

6. Computerimplementiertes Verfahren nach Anspruch **5,** weiter den Schritt des Bereitstellens eines symmetrischen Verschlüsselungsschemas für den mindestens einen Empfänger umfassend, um die empfangenen verschlüsselten empfindlichen Daten mit der Verwendung des entschlüsselten umgewandelten symmetrischen Sitzungsschlüssels (8) zu entschlüsseln.

7. Computerimplementiertes Verfahren nach einem der Ansprüche **1** bis **6,** wobei jeder der generierten Schlüssel einem Identifizierungscode zugewiesen ist.

8. Computerimplementiertes Verfahren nach einem der Ansprüche **1** bis **7,** wobei das computerimplementierte Verfahren einen weiteren Schritt des Empfangens der verschlüsselten empfindlichen Daten von dem mindestens einen Kunden, und Übertragen der verschlüsselten empfindlichen Daten an den mindestens einen Empfänger umfasst.

9. Computerimplementiertes Verfahren nach einem der Ansprüche **1** bis **8,** wobei die verschlüsselten empfindlichen Daten mit einem Identifizierungscode, der dem symmetrischen Sitzungsschlüssel (5) zugewiesen ist, der zur Entschlüsselung der verschlüsselten empfindlichen Daten zu verwenden ist, übertragen werden.

10. System zum Schutz der Speicherung empfindlicher Daten und gemeinsamen Nutzung in einem multizentrischen System, wobei das System ein Datenverarbeitungssystem umfasst, das Mittel zum Ausführen der Schritte des Verfahrens nach einem der Ansprüche **1** bis **9** umfasst.

11. Computerprogrammprodukt zum Schutz der Speicherung empfindlicher Daten und gemeinsamen Nutzung in einem multizentrischen System, wobei das Computerprogrammprodukt Anweisungen umfasst, die, wenn das Programm durch eine Vielzahl von Computern ausgeführt wird, bewirken, dass die Computer die Schritte des Verfahrens nach einem der Ansprüche **1** bis **9** ausführen.

12. Computerlesbares Speichermedium, Anweisungen umfassend, die, wenn das Programm durch eine Vielzahl von Computern ausgeführt wird, bewirken, dass die Computer die Schritte des Verfahrens nach einem der Ansprüche **1** bis **9** ausführen.

## Revendications

1. Procédé mis en œuvre par ordinateur pour la protection du partage et du stockage de données sensibles dans un système multicentrique ; ledit procédé comprenant les étapes de :
a) Réception d'une requête d'au moins un client dans le système multicentrique de partage et/ou de stockage de données sensibles au sein d'au moins un bénéficiaire dans le système multicentrique ;
b) Fourniture d'au moins une paire de clés (2) au au moins un client et d'au moins une paire de clés (2) au au moins un bénéficiaire au sein du système multicentrique, chacune desdites au moins une paire de clés (2) comprenant une clé publique et une clé privée ;
c) Réception d'au moins une clé symétrique de session (6) chiffrée du au moins un client, dans laquelle ladite au moins une clé symétrique de session (5) est chiffrée en utilisant la clé publique dudit au moins un client et un schéma de chiffrement ; et
d) Envoi de la clé symétrique de session (7) chiffrée au au moins un bénéficiaire ;
dans lequel :
- l'étape b) comprend la fourniture de ladite au moins une paire de clés (2) en fournissant au au moins un client et au au moins un bénéficiaire un service de génération de clé utilisant une paire de clés principale (1) générée avec un schéma de chiffrement asymétrique, en tant que base pour générer ladite au moins une paire de clés (2) dudit au moins un client par ledit au moins un client et pour générer ladite au moins une paire de clés (2) du au moins un bénéficiaire par ledit au moins un bénéficiaire,
- ladite au moins une clé symétrique de session (5) de l'étape c) est une clé symétrique générée par le au moins un client à partir d'une clé principale de dérivation (4) du au moins un client, ladite clé principale de dérivation (4) étant générée avec une clé principale symétrique (3) et un schéma de chiffrement symétrique pour chacun desdits au moins un clients et reçu par chacun desdits au moins un clients, ladite clé principale symétrique (3) étant générée avec un schéma de chiffrement symétrique, et comprenant une limite de traitement pour les données sensibles dont ledit au moins un client a demandé à ce qu'elles soient partagées et/ou stockées,
- à l'étape c), ladite au moins une clé symétrique de session (5) est chiffrée en utilisant un schéma de chiffrement homomorphe en tant que ledit schéma de chiffrement, de telle sorte que la clé symétrique de session chiffrée (6) puisse être modifiée sans être déchiffrée ;
- ledit procédé comprend en outre la transformation de la au moins une clé symétrique de session (6) chiffrée générée par ledit au moins un client sans la déchiffrer, de telle sorte que ladite au moins une clé symétrique de session (7) chiffrée transformée puisse être déchiffrée en utilisant la clé privée de ladite au moins une paire de clés (2) en possession dudit au moins un bénéficiaire ;
- l'étape d) comprend l'envoi de la clé symétrique de session (7) chiffrée au au moins un bénéficiaire sous la forme transformée de ladite clé symétrique de session (7) chiffrée.

2. Procédé mis en œuvre par ordinateur selon la revendication **1,** dans lequel ledit procédé comprend au moins une des étapes de génération de ladite paire de clés principale (1), de génération de ladite clé principale symétrique (3), et de génération de ladite clé principale de dérivation (4) et transmission de ladite clé principale de dérivation (4) à chaque au moins un client correspondant.

3. Procédé mis en œuvre par ordinateur selon la revendication **1** ou la revendication **2,** dans lequel l'information définissant une limite de traitement pour les données sensibles comprend au moins un but de limitation du traitement, des parties prenantes et de stockage de temps.

4. Procédé mis en œuvre par ordinateur selon l'une quelconque des revendications **1** à **3,** comprenant en outre l'étape de fourniture d'un schéma de chiffrement symétrique au au moins un client, à utiliser avec la clé publique générée par ledit au moins un client à partir de l'étape b) du procédé mis en œuvre par ordinateur, de sorte à chiffrer les données sensibles dont le au moins un client a demandé à ce qu'elles soient partagées et/ou stockées au sein du au moins un bénéficiaire.

5. Procédé mis en œuvre par ordinateur selon l'une quelconque des revendications **1** à **4,** comprenant en outre l'étape de fourniture d'un schéma de déchiffrement homomorphe au au moins un bénéficiaire de façon à déchiffrer la clé symétrique de session (7) chiffrée transformée en utilisant ladite au moins une clé privée dudit au moins un bénéficiaire, générée par le au moins un bénéficiaire à partir de l'étape b) du procédé mis en œuvre par ordinateur.

6. Procédé mis en œuvre par ordinateur selon la revendication **5,** comprenant en outre l'étape de fourniture d'un schéma de chiffrement symétrique au au moins un bénéficiaire de façon à déchiffrer les données sensibles chiffrées reçues en utilisant la clé symétrique de session (8) transformée déchiffrée.

7. Procédé mis en œuvre par ordinateur selon l'une quelconque des revendications **1** à **6,** dans lequel chacune des clés générées est associée à un code d'identification.

8. Procédé mis en œuvre par ordinateur selon l'une quelconque des revendications **1** à **7,** dans lequel le procédé mis en œuvre par ordinateur comprend en outre une étape de réception des données sensibles chiffrées du au moins un client et la transmission desdites données sensibles chiffrées au au moins un bénéficiaire.

9. Procédé mis en œuvre par ordinateur selon l'une quelconque des revendications **1** à **8,** dans lequel les données sensibles chiffrées sont transmises avec un code d'identification associé à la clé symétrique de session (5) à utiliser pour le déchiffrement desdites données sensibles chiffrées.

10. Système pour la protection du partage et du stockage de données sensibles dans un système multicentrique, le système comprenant un système de traitement de données comprenant des moyens pour réaliser les étapes du procédé selon l'une quelconque des revendications **1** à **9.**

11. Produit programme d'ordinateur pour la protection du partage et du stockage de données sensibles dans un système multicentrique, le produit programme d'ordinateur comprenant des instructions qui, lorsque le programme est exécuté par une pluralité d'ordinateurs, conduisent les ordinateurs à réaliser les étapes du procédé selon l'une quelconque des revendications **1** à **9.**

12. Support de stockage lisible par ordinateur comprenant des instructions qui, lorsque le programme est exécuté par une pluralité d'ordinateurs, conduisent les ordinateurs à réaliser les étapes du procédé selon l'une quelconque des revendications **1** à **9.**
